# EUROPEAN PATENT SPECIFICATION

(11) **EP 3 736 162 B1**
(45) Date of publication and mention of the grant of the patent: **09.03.2022**
(21) Application number: 20172835.9
(22) Date of filing: 05.05.2020
(51) Int. Cl.: B60K 35/00, B60K 37/06, B60R 11/00, B60R 11/02, B60K 17/28

(54) **AGRICULTURAL VEHICLE PROVIDING AN AUTOMATIC DISPLAY SELECTION**
LANDWIRTSCHAFTLICHES FAHRZEUG MIT AUTOMATISCHER ANZEIGEAUSWAHL
VÉHICULE AGRICOLE FOURNISSANT UNE SÉLECTION D'AFFICHAGE AUTOMATIQUE

(30) Priority: 06.05.2019 IT 201900006556
(43) Date of publication of application: 11.11.2020
(73) Proprietor: CNH Industrial Italia S.p.A., 10135 Torino (IT)
(72) Inventor: Fiorati, Stefano, 44028 Poggio Renatico (Ferrara) (IT); Lenzini, Nicola, 41027 Pievepelago (IT)
(74) Representative: CNH Industrial IP Department

(56) References cited:
- EP-A1- 1 674 324
- EP-A1- 2 444 919
- EP-B2- 1 674 324
- WO-A1-2017/047132
- DE-A1- 19 722 081
- DE-U1- 20 013 646

## Description

### TECHNICAL FIELD

The present invention concerns an agricultural vehicle providing an automatic display selection.

### BACKGROUND OF THE INVENTION

Display are provided inside the cab of vehicle to show to the driver data describing the functioning of the vehicle engine and/or parameter of the vehicle. The data comprise, for instance, vehicle speed, vehicle rpm, engaged gear, warning indications, wheel slip percentage, etc.

During the mission of the vehicle the driver turns frequently his/her head rearwardly and laterally in order to see the outside of the vehicle and the state of the implement. During this turning operation, the drivers cannot see the display and he/she may lose important information.

DE20013646 discloses the use of an additional display to the existing computer with an integrated display in an agricultural machine for displaying useful information.

Scope of the present invention is to provide an agricultural vehicle wherein the user never loses the contact with the information provided by the display.

### SUMMARY OF THE INVENTION

The aforementioned aim is reached by the present invention as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 shows schematically a rear view of a cab of agricultural vehicle according to the present invention;
- Figure 2 shows schematically a lateral view of a cab of agricultural vehicle according to the present invention;
- Figure 3 shows schematically a front view of a cab of agricultural vehicle according to the present invention;
- Figure 4 represents an electric schema of the agricultural vehicle according to the present invention; and
- Figure 5 represent a particular of the present invention.

### DETAILED DESCRIPTION OF THE INVENTION

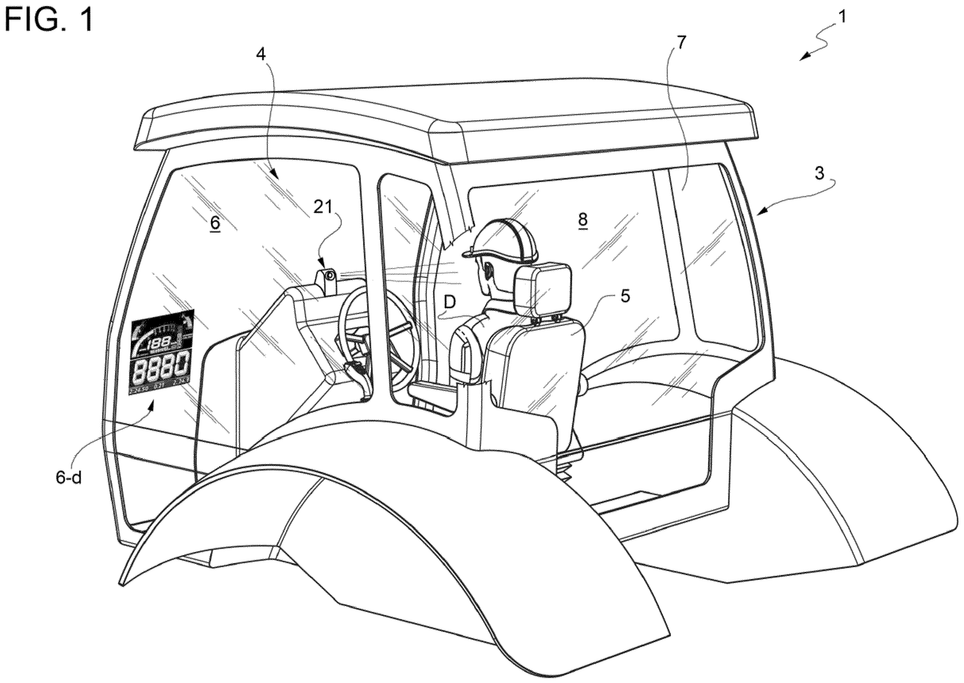

In figures 1, 2 and 3 numeral 1 indicates an agricultural vehicle (shown partially) that is designed to be coupled with at least one implement (not shown) that receives torque from a Power Torque Output PTO of known kind (not shown) of the agricultural vehicle. The agricultural vehicle may be any kind of agricultural vehicle such as a tractor, a cultivator, a harvester, a baler, etc. and may be equipped with a front and/or a rear PTO.

The vehicle comprises a vehicle cab 3 that defines an inner space 4 where at least one seat 5 for the driver D is located.

The vehicle cab 3 is provided with a front windshield 6, a rear windshield 7 and at least one lateral windshield 8. In the example two lateral windshields 8 are provided in the door structure of the cab 3.

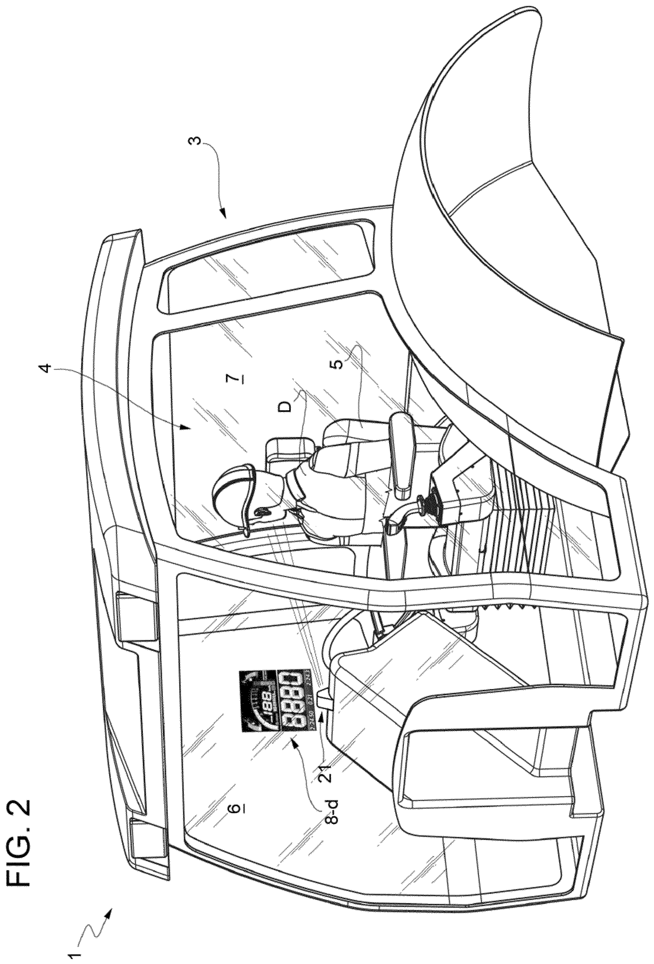

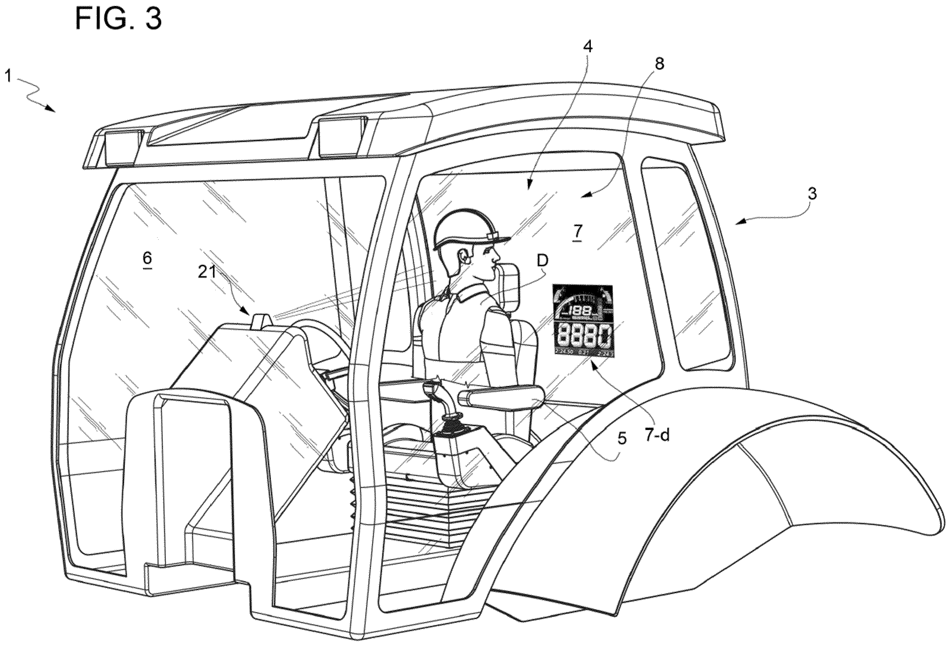

According to the present invention a first data display 6-d (figure 1) is coupled with the front windshield 6 and is facing the seat 5, a second data display 7-d is coupled with a rear windshield 7 (figure 3) and placed behind of the seat 5 and a third data display 8-d (figure 2) is coupled with the lateral windshield 8 and placed on one side of the seat 5.

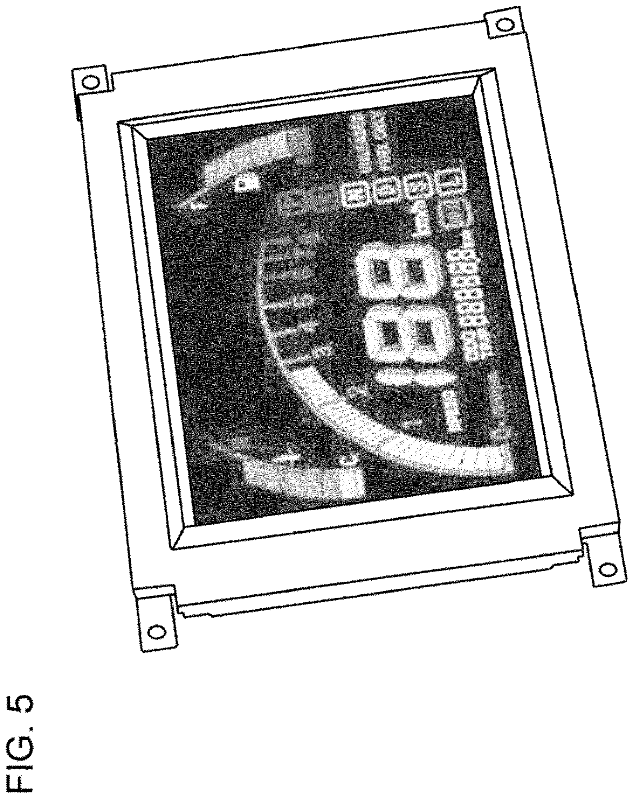

Typically, the first, the second and the third display 6-d, 7-d, 8-d are retro illuminated display having a square flat structure (see figure 5).

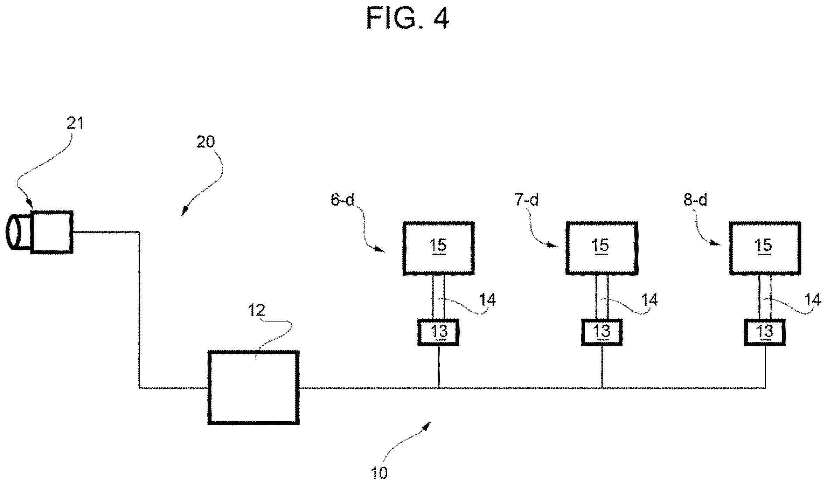

With reference to figure 4, it is provided a data transmission link 10 (for instance an Ethernet link) connecting the first data display 6-d, the second data display 7-d and the third data display 8-d with an ECU (Electronic Control Unit) 12 of the vehicle for providing data describing the functioning of the vehicle engine and/or parameter of the vehicle.

In figure 4, numeral 13 indicates display control unit, numeral 14 flat connecting cable 14 and numeral 15 data display body.

It is provided an imagine capture system 20 designed to take images of the inner space 4 for detecting the position of the head of the driver. The image capture system 20 works with known algorithms (for example by using computer vision algorithms, or neural networks algorithms, or generic image processing algorithms etc.) for detecting a front head position (figure 1), a rear head position (figure 3) and a lateral head position (figure 2) with respect to a reference system.

ECU 20 realizes a switch that cooperates with data link 10 in order to activate the first display 6-d, the second display 7-d or the third display 8-d if a front head position, a rear head position and a lateral head position has been respectively detected.

So that if the driver is looking forwardly through the front windshield 6 (figure 1) he/she can see the necessary data on the first data display 6-d, if the driver is looking rearwardly through the rear windshield 7 (figure 3) he/she can see the necessary data on the second data display 7-d and if the driver is looking laterally (figure 2) through the lateral windshield 8 he/she can see the necessary data on the third data display 8-d. Accordingly the driver D may have a look at the necessary data (vehicle speed, vehicle rpm, engaged gear, for instance) in any operating condition even if he/she is looking back or laterally to see the implements or the outside of the vehicle. The ECU 12 is in communication with the implements eventually attached to the front or rear PTO or both. The communication is provided through CAN-BUS or any other system able to transfer communication among the ECU 12, sensors, control units of the vehicle and implements.

The ECU is also designed so that if the driver D is looking forwardly through the front windshield 6, the driver can see the necessary data on the first data display 6-d and in addition the data describing the functioning of the implement attached to the front PTO, since it is likely that the driver when looking forwardly is more interested in the data describing the functioning of the front implement. If the driver is looking rearwardly through the rear windshield 7, the driver can see the necessary data on the second data display 7-d and in addition the data describing the functioning of the implement attached to the rear PTO since it is likely that the driver is more interested in the data related to the rear implement when looking rearwardly.More specifically the ECU 20 is designed, when one display is switched on, to switch off the other displays avoid unnecessary lighting generation inside of the cab. This function is quite useful at night.

## Claims

1. Agricultural vehicle (1) that is designed to be coupled with one implement that receives torque from a rear Power Torque Output PTO of the agricultural vehicle, the vehicle comprising:
a vehicle cab (3) defining an inner space (4) where a seat (5) for the driver is located; the vehicle cab (3) is provided with a front windshield (6), a rear windshield (7) and at least one lateral windshield (8);
a first data display (6-d) coupled with the front windshield (6) and facing the seat (5), **characterized in that**
the agricultural vehicle further comprises a second data display
(7-d) coupled with the rear windshield (7) and placed behind of the seat (5) and a third data display (8-d) coupled with the lateral windshield (8) and placed on one side of the seat (5),
data transmission means (10) connecting the first data display (6-d), the second data display (7-d) and the third data display (8-d) with an electronic control unit (12) of the vehicle (1) for providing data describing the functioning of the vehicle engine and/or parameters of the vehicle;
imagine capture system (20) designed to take images of the inner space for detecting the position of the head of the driver and detecting a front head position, a rear head position and a lateral head position;
switching means cooperating with the data transmission means (10) in order to activate the first (6-d), the second (7-d) or the third display (8-d) if a front head position, a rear head position and a lateral head position has been respectively detected.

2. Agricultural vehicle as defined in claim 1, wherein the first data display (6-d), the second data display (7-d) or the third data display (8-d) are retro illuminated display.

3. Agricultural vehicle as defined in claim 2, wherein when one data display is switched on the other data displays are switched off to avoid unnecessary lighting generation inside of the cab.

4. Agricultural vehicle as defined in claim 1 wherein the electronic control unit is further configured for displaying in the second data display (7-d) first additional data describing the functioning of said one implement when attached to the rear PTO.

5. Agricultural vehicle as defined in claim 4 and comprising a front PTO wherein the electronic control unit is further configured for displaying in the first data display (6-d) second additional data describing the functioning of an additional implement when attached to the front PTO.

## Patentansprüche

1. Landwirtschaftliches Fahrzeug (1), das dazu eingerichtet ist, mit einem Arbeitsgerät verbunden zu werden, das ein Drehmoment von einer hinteren Zapfwelle (PTO) des landwirtschaftlichen Fahrzeugs abnimmt, wobei das Fahrzeug umfasst:
ein Fahrzeug-Führerhaus (3), das einen Innenraum (4) definiert, in dem ein Sitz (5) für den Fahrer angeordnet ist; wobei das Fahrzeug-Führerhaus (3) mit einer Frontscheibe (6), einer Rückscheibe (7) und zumindest einer Seitenscheibe (8) ausgestattet ist;
eine erste Datenanzeige (6d), die mit der Frontscheibe (6) verbunden ist und dem Sitz (5) zugewandt ist, **dadurch gekennzeichnet, dass** das landwirtschaftliche Fahrzeug weiterhin umfasst:
eine zweite Datenanzeige (7d), die mit der Rückscheibe (7) verbunden und hinter dem Sitz (5) angeordnet ist, und eine dritte Datenanzeige (8d), die mit der Seitenscheibe (8) verbunden ist und auf einer Seite des Sitzes (5) angeordnet ist,
Datenübertragungsmittel (10), die die erste Datenanzeige (6d), die zweite Datenanzeige (7d) und die dritte Datenanzeige (8d) mit einer elektronischen Steuereinheit (12) des Fahrzeugs (1) zum Bereitstellen von den Betrieb des Fahrzeugmotors und/oder Parametern des Fahrzeugs beschreibenden Daten verbindet;
ein Bildaufnahmesystem (20), das zum Aufnehmen von Bildern des Innenraums zum Erfassen der Position des Kopfs des Fahrers und zum Erfassen einer vorderen Kopfposition, einer hinteren Kopfposition und einer seitlichen Kopfposition eingerichtet ist;
Schaltmittel, die mit den Datenübertragungsmitteln (10) zusammenwirken, um die erste (6d), die zweite (7d) oder die dritte Anzeige (8d) zu aktivieren, wenn eine vordere Kopfposition, eine hintere Kopfposition und eine seitliche Kopfposition entsprechend erkannt wurde.

2. Landwirtschaftliches Fahrzeug nach Anspruch 1, wobei die erste Datenanzeige (6d), die zweite Datenanzeige (7d) oder die dritte Datenanzeige (8d) eine hinterleuchtete Anzeige ist.

3. Landwirtschaftliches Fahrzeug nach Anspruch 2, wobei, wenn eine Datenanzeige eingeschaltet wird, die anderen Datenanzeigen ausgeschaltet werden, um eine unnötige Lichterzeugung im Führerhaus zu vermeiden.

4. Landwirtschaftliches Fahrzeug nach Anspruch 1, wobei die elektronische Steuereinheit weiterhin dazu eingerichtet ist, in der zweiten Datenanzeige (7d) erste Zusatzdaten anzuzeigen, die den Betrieb des Arbeitsgeräts beschreiben, wenn dieses an der hinteren Zapfwelle angebracht ist.

5. Landwirtschaftliches Fahrzeug nach Anspruch 4 und umfassend eine vordere Zapfwelle, wobei die elektronische Steuereinheit weiterhin dazu eingerichtet ist, in der ersten Datenanzeige (6d) zweite Zusatzdaten anzuzeigen, die den Betrieb eines zusätzlichen Arbeitsgeräts beschreiben, wenn dieses an der vorderen Zapfwelle angebracht ist.

## Revendications

1. Véhicule agricole (1) conçu pour être couplé à un outil recevant le couple d'une prise de force arrière (PTO) du véhicule agricole, le véhicule comprenant :
une cabine du véhicule (3) définissant un espace intérieur (4) dans lequel se trouve un siège (5) pour le conducteur ; la cabine du véhicule (3) est équipée d'un pare-brise avant (6), d'un pare-brise arrière (7) et au moins d'un pare-brise latéral (8) ;
un premier dispositif d'affichage de données (6-d) couplé au pare-brise avant (6) et faisant face au siège (5), **caractérisé en ce que** le véhicule agricole comprend en outre
un deuxième dispositif d'affichage de données (7-d) couplé au pare-brise arrière (7) et situé à l'arrière du siège (5) et un troisième dispositif d'affichage de données (8-d) couplé au pare-brise latéral (8) et situé sur un côté du siège (5) ;
des moyens de transmission de données (10) connectant le premier dispositif d'affichage de données (6-d), le deuxième dispositif d'affichage de données (7-d) et le troisième dispositif d'affichage de données (8-d) par le biais d'une unité de commande électronique (12) du véhicule (1) pour fournir des données décrivant le fonctionnement du moteur du véhicule et/ou des paramètres du véhicule ;
un système de capture d'image (20) conçu pour prendre des images de l'espace intérieur afin de détecter la position de la tête du conducteur et de détecter une position de tête avant, une position de tête arrière et une position de tête latérale;
des moyens de commutation coopérant avec les moyens de transmission de données (10) afin d'activer le premier (6-d), le deuxième (7-d) ou le troisième dispositif d'affichage (8-d) lorsqu'une position de tête avant, une position de tête arrière ou une position de tête latérale a respectivement été détectée.

2. Véhicule agricole selon la revendication 1, dans lequel le premier dispositif d'affichage de données (6-d), le deuxième dispositif d'affichage de données (7-d) ou le troisième dispositif d'affichage de données (8-d) sont des écrans rétro-éclairés.

3. Véhicule agricole selon la revendication 2, dans lequel lorsqu'un dispositif d'affichage de données est activé, les autres dispositifs d'affichage de données sont éteints afin d'éviter la production inutile de lumière à l'intérieur de la cabine.

4. Véhicule agricole selon la revendication 1, dans lequel l'unité de commande électronique est en outre configurée pour afficher sur le deuxième dispositif d'affichage de données (7-d) des premières données complémentaires décrivant le fonctionnement dudit outil lorsqu'il est attaché à la prise de force arrière.

5. Véhicule agricole selon la revendication 4 et comprenant une prise de force avant dans lequel l'unité de commande électronique est en outre configurée pour afficher sur le premier dispositif d'affichage de données (6-d) des deuxièmes données complémentaires décrivant le fonctionnement d'un outil supplémentaire lorsqu'il est attaché à la prise de force avant.
